# FASCICULE DE BREVET EUROPEEN

(11) **EP 2 698 302 B1**
(45) Date de publication et mention de la délivrance du brevet: **27.04.2016**
(21) Numéro de dépôt: 13358005.0
(22) Date de dépôt: 08.08.2013
(51) Int. Cl.: B62D 3/14, B62D 5/22, F16H 19/04, F16H 35/00, B62D 7/08

(54) **Direction hydraulique de véhicules et engins automoteurs**
Hydraulische Lenkung von selbst fahrenden Fahrzeugen und Maschinen
Hydraulic steering of vehicles and self-propelled machinery

(30) Priorité: 14.08.2012 FR 1257796
(43) Date de publication de la demande: 19.02.2014
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- EP-A1- 0 533 179
- WO-A1-2006/079492
- WO-A2-01/25071
- FR-A1- 2 370 878
- US-A- 2 192 175
- US-A- 2 757 014
- US-A- 5 718 149

## Description

La présente invention concerne une direction hydraulique de véhicules faisant application de modules hydrauliques générant un mouvement de rotation d'amplitude variable à partir d'un débit hydraulique constant.

L'invention entre dans le domaine des véhicules automoteurs comportant au moins deux roues directrices. Plus précisément, elle concerne le domaine des engins automoteurs à deux roues directrices permettant, par exemple, des braquages selon l'épure de Jeantaud. Elle est notamment applicable :
- à l'équipement des machines à vendanger ;
- à des véhicules ou engins automoteurs à au moins deux roues directrices, pour lesquels les utilisateurs souhaitent disposer de machines appelées à réaliser des braquages de rayon le plus petit possible.

Les engins automoteurs possédant au moins deux roues directrices sont équipés de systèmes de direction permettant de les diriger lors de leurs déplacements. Ces systèmes de direction agissent directement au niveau de chaque roue directrice afin d'assurer le braquage de l'engin.

Afin de réaliser ce braquage de façon efficace, et éviter un phénomène de « ripage des roues » (action de glissement des roues au lieu de roulement, ce qui dégrade ainsi le sol et les pneumatiques), il est nécessaire, lors du braquage, que les axes de rotation de chacune des roues de l'engin, directionnelle ou non, soient concourants en un point unique qui est le centre instantané de rotation (CIR) de l'engin en projection au sol : il s'agit de l'application du principe de l'épure de Jeantaud.

Il existe différentes méthodes pour réaliser cette épure (directions mécaniques, électriques, hydrauliques, voire combinées), la plus répandue mettant en oeuvre des biellettes de direction et des vérins qui permettent, selon une géométrie adaptée et connue de l'Homme de l'Art, d'approcher cette épure. Les gros inconvénients de ce système de direction sont :
- l'encombrement ;
- un rayon de braquage du véhicule important, car l'angle de braquage maximum est limité par la technologie de ce système à biellettes et vérins.
- une perte de couple très importante en fin de braquage due à la cinématique de ce type de direction.

Pour un engin automoteur du genre utilisé, par exemple, dans le domaine agricole et, en particulier pour un véhicule enjambeur (machine à vendanger, machine de prétaillage, ...), il est très important d'augmenter la capacité de manoeuvrabilité de l'engin, notamment dans les tournières courtes, et de limiter le nombre de manoeuvres dans les opérations de braquage. On cherche ainsi à limiter le rayon de braquage de l'engin à la plus petite valeur possible.

Mais la réalisation de ce faible rayon de braquage n'est pas possible avec les technologies mécaniques existant actuellement en respectant l'épure de Jeantaud, de la ligne droite au virage maximum, notamment avec les machines possédant des systèmes de direction à embiellages et vérin, voire à vérins à crémaillères classiques.

Par ailleurs, dans le cas d'un engin enjambeur, la voie de circulation du véhicule est liée à la distance comprise entre deux rangs de plantes, variable en fonction des régions et du type de plante cultivée. Si on envisage la construction d'un véhicule à voie variable, on peut difficilement se satisfaire d'un système de direction mécanique à embiellages et vérins.

Les constructeurs de ces véhicules cherchent donc à :
- supprimer les liaisons mécaniques des roues directrices ;
- être indépendant de la variabilité de la voie du véhicule ;
- respecter l'épure de Jeantaud en tout point, lors du braquage ;
- disposer d'un système permettant de réduire au minimum possible le rayon de braquage, lorsque cela est nécessaire.

Il existe aujourd'hui différentes solutions de systèmes de direction :
- système de direction par embiellage mécanique et vérins : système le plus ancien et le plus classiquement utilisé de nos jours. Généralement, les embiellages gauche et droit d'un tel système sont liés mécaniquement ;
- système de direction électrique : tel que décrit par exemple dans le document EP-0.300.185 appliqué à un fauteuil roulant pour personnes handicapées dont les deux roues avant, sont couplées, chacune à un moteur d'orientation actionné manuellement via un transmetteur/calculateur mécanique/électrique d'angle d'orientation des roues ;
- système de direction hydraulique : via par exemple un système de vérin hydraulique à crémaillère droite comme décrit dans les documents FR1.201.675, ou FR-2.694.535 qui décrit une transmission hydraulique par vérin hydraulique à tige disposé sur chacune des roues directrices ;
- système de direction mécanique à double came rotative de direction tel que décrit dans le document US-2007/ 01 44796.

Parmi les systèmes cités ci-dessus, le système de direction électrique tel que décrit pour le fauteuil roulant concerné par le document EP-0.300.185, présente plusieurs avantages pour réaliser les besoins à satisfaire, mais quand on parle d'un véhicule de plusieurs centaines de kilogrammes, voire plusieurs tonnes, les systèmes électriques à mettre en oeuvre (moteurs directionnels, moteur de traction électriques des roues, ...) sont certes réalisables avec les technologies actuelles, mais ce sont des solutions complexes et chères puisque les courants engagés nécessitent la mise au point d'une électronique de puissance complexe et encore peu fiable. Cela est envisagé sur des véhicules tout électrique, possédant toutefois des autonomies limitées.

Concernant les systèmes de direction mécaniques, les systèmes à embiellage sont exclus dans le cadre des objectifs visés par l'invention et les systèmes à double cames rotatives peuvent certes apporter des solutions dans le cadre de véhicules légers tels que des tondeuses à gazon autoportées, mais sont difficilement envisageables en termes de complexité sur un véhicule enjambeur pouvant en outre s'adapter à une voie variable.

De plus, sur un véhicule enjambeur où la traction se fait au niveau des roues par des moteurs hydrauliques, il serait souhaitable d'utiliser la même énergie pour diriger ces mêmes roues.

Le système de direction hydraulique proposé dans le document FR2.694.535 n'est toutefois pas satisfaisant, car il complète la solution hydraulique par un embiellage mécanique au niveau de chaque roue et ne permet pas, compte tenu de l'encombrement des vérins et dudit embiellage mécanique, de réaliser facilement des rayons de braquage supérieurs à 90 degrés.

Les documents WO-01/25071 et US 2 757 014 décrivent des systèmes de direction hydraulique de l'art antérieur. US 2 192 175 divulgue une direction hydraulige comprenant toutes les caractéristiques du préambule de la revendication 1.

Dans les autres domaines, pour la plupart déjà cités tels que véhicules légers (fauteuils roulants, tondeuses autoportées, ..), ces derniers font plutôt référence à des systèmes de direction électrique ou mécanique pour véhicules agricoles ou de travaux publics, voire pour véhicules militaires.

À part l'application au domaine des véhicules légers ou à celui des véhicules articulés à plus de deux roues directrices (véhicules forestiers par exemple), on ne connaît pas de système de direction hydraulique permettant de satisfaire les besoins de possibilité d'effectuer des virages ayant une très petite valeur de rayon de braquage. L'objet de l'invention est notamment de remédier aux inconvénients et insuffisances des systèmes de direction de l'état de la technique.

La solution qui fait l'objet de la présente invention consiste à générer un mouvement de rotation d'amplitude variable sur un système à partir d'un composant hydraulique de type vérin incorporant un système de piston à crémaillère linéaire à profil variable (crémaillère came) et pignon cylindrique ou non (pignon came) qui, à partir d'un débit hydraulique constant, assure ce mouvement de rotation d'amplitude variable dudit pignon. Et inversement, une rotation continue du pignon, assure un mouvement de translation variable au niveau du vérin (principe de la came associé à un module hydraulique).

L'invention est avantageusement applicable à la réalisation de directions hydrauliques de véhicules ou d'engins automoteurs comportant au moins deux roues directrices et pour lesquelles on veut obtenir la possibilité d'effectuer des virages serrés respectant le principe de l'épure de Jeantaud suivant lequel, pour ne pas déraper en virage, il faut que les quatre roues du véhicule tournent autour d'un même point, donc que les axes des roues se rejoignent au même point.

Le système de direction hydraulique selon l'invention comporte un volant relié à un distributeur hydraulique et ledit système est principalement remarquable en ce qu'il comprend au moins deux modules hydrauliques, comprenant, chacun,
- d'une part, un corps de module, incluant un ensemble constitué d'un piston double solidaire en translation d'une crémaillère, ledit piston double étant logé avec une aptitude de coulissement étanche dans un corps de vérin dans lequel il délimite deux chambres opposées, et,
- d'autre part, un pignon, engrenant avec la crémaillère,
- celle-ci et ledit pignon étant conformés, et conjugués, de sorte que tout mouvement de translation de la crémaillère génère, à partir de l'introduction, à débit constant, d'un fluide hydraulique dans l'une des chambres, un mouvement de rotation d'amplitude variable dudit corps de module ou dudit pignon, l'élément ainsi animé d'un mouvement rotatif (corps de module ou pignon), pouvant être relié à un organe pivotant d'un véhicule ou d'un engin automoteur, tandis que l'élément non rotatif (pignon ou corps de module) peut être rattaché à un élément fixe dudit véhicule ou dudit engin automoteur ;
chacun de ces modules hydrauliques étant relié, d'une part, par l'intermédiaire de son élément pivotant, à l'une des roues directrices du véhicule, et d'autre part, par l'intermédiaire de son organe fixe, au châssis dudit véhicule, et en ce que ledit distributeur est connecté à l'une des deux chambres délimitée par le piston à crémaillère de chaque module, la seconde desdites chambres de chacun des modules communiquant entre elles.

Selon un mode d'exécution, le corps de chaque module est relié à un organe mobile d'un véhicule ou d'un engin automoteur, tandis que le pignon est rigidement fixé à un élément fixe dudit véhicule ou dudit engin automoteur.

Selon un autre mode de réalisation, le pignon est relié à un organe mobile d'un véhicule ou d'un engin automoteur, tandis que le corps de module est solidarisé à un élément fixe dudit véhicule ou dudit engin automoteur.

Selon un mode de réalisation, la crémaillère est constituée par un élément intermédiaire disposé entre les deux pistons formant les extrémités opposées de l'ensemble mobile d'un vérin hydraulique à crémaillère.

Selon un autre mode de réalisation, l'une des extrémités de la crémaillère est reliée au piston à double effet d'un vérin hydraulique par l'intermédiaire de la tige de ce piston, ledit vérin hydraulique étant disposé à l'extérieur du corps dans lequel est logée la crémaillère et dans le prolongement longitudinal de ce corps.

Selon un autre mode d'exécution, le pignon est en prise avec les dentures de deux crémaillères parallèles, inversement orientées.

Selon un mode d'exécution, la denture de la crémaillère du piston double à crémaillère présente un profil linéaire variable.

Selon un autre mode d'exécution possible, la denture de la crémaillère du piston double à crémaillère présente un profil rectiligne.

Selon un autre mode d'exécution, le pignon engrenant avec la crémaillère du piston double à crémaillère est un pignon circulaire excentré.

Selon un autre mode d'exécution possible, le pignon engrenant avec la crémaillère du piston double à crémaillère est un pignon came.

Selon un mode d'exécution, le pignon est maintenu en prise avec la denture de la ou des crémaillères par l'intermédiaire de moyens élastiques agissant en traction ou en compression.

Selon un mode d'exécution préféré, chaque module hydraulique comprend :
- un corps de module, incluant un vérin hydraulique à double effet comportant un corps cylindrique creux dans lequel est logé, avec une aptitude de coulissement étanche, un piston double constitué par un piston à crémaillère linéaire à profil variable ou crémaillère came, ce piston délimitant deux chambres à l'intérieur dudit corps dont les extrémités opposées sont munies d'une ouverture raccordée à un distributeur hydraulique permettant de commander l'entrée du fluide hydraulique dans l'une desdites chambres et l'évacuation de la seconde de celles-ci, d'un volume égal dudit fluide hydraulique,
- et un pignon, cylindrique excentré par rapport à l'axe de rotation du corps de module, engrenant avec la crémaillère du piston double à crémaillère, ou un piston en forme de came ;
de sorte que dans le cas où le pignon est fixe et le corps de module mobile autour dudit pignon, le déplacement continu du piston à crémaillère dans le corps du vérin entraîne un mouvement de basculement d'amplitude variable dudit corps de module autour dudit pignon, à partir d'un débit constant du fluide hydraulique introduit dans l'une des chambres du vérin, tandis que dans le cas où le corps de module est fixe et le pignon cylindrique, excentré, ou en forme de came est mobile, le déplacement continu du piston crémaillère dans le corps du vérin entraîne un mouvement de rotation d'amplitude variable dudit pignon.

On conçoit ainsi qu'en reliant le corps de module à une roue de véhicule, tandis que le pignon est lié rigidement à la structure du véhicule, il est possible de communiquer un mouvement de rotation d'amplitude variable à cet organe mobile avec un débit de fluide constant qui peut être piloté par un système de distribution hydraulique simple.

De préférence, le corps de module de chaque module est pivotant, et relié à l'une des roues directrices du véhicule, tandis que le pignon excentré, cylindrique ou à profil de came, dudit module est assujetti fixement au châssis dudit véhicule.

Selon un autre mode d'exécution, le corps de module de chaque module, est fixe et rigidement solidaire du châssis du véhicule, tandis que le pignon excentré, cylindrique ou à profil de came, dudit module est solidaire de l'une des roues du véhicule.

De manière avantageuse, le distributeur hydraulique est préférentiellement constitué par un distributeur hydrostatique rotatif, tel que par exemple un dispositif de servocommande hydrostatique rotatif, connu en soi sous le nom d'« orbitrol ».

De manière intéressante, chaque module comporte un système de butées réglable en translation permettant un réglage de l'angle de braquage maximal pour stopper l'organe pivotant dans sa position de braquage maximal tout en maintenant la circulation du fluide hydraulique au travers du module.

Suivant une autre disposition caractéristique, ce système de butée comprend un clapet anti-retour est positionné de manière réglable axialement aux extrémités du corps du vérin et disposé en regard d'une tige ou pointeau lié au piton à crémaillère, actionnant, en fin de course, ledit clapet anti-retour et mettant ainsi directement en liaison le débit du fluide hydraulique en amont du piston vers le deuxième module. L'angle de braquage peut donc être géré par un réglage en translation de la position du clapet anti-retour.

Les buts, caractéristiques et avantages de la direction hydraulique selon l'invention ressortiront mieux de la description qui suit et des dessins annexés dans lesquels :
La figure 1 est une vue schématique illustrant un premier exemple de réalisation de l'un des modules hydrauliques équipant la direction hydraulique selon l'invention qui comporte deux modules identiques.
La figure 2 est une vue schématique d'un deuxième exemple de réalisation de ce module.
La figure 3 est une vue schématique d'un troisième exemple de réalisation de ce module.
La figure 4 est une vue schématique d'un quatrième exemple de réalisation dudit module hydraulique.
La figure 5 est une vue schématique d'un cinquième exemple de réalisation de ce module.
La figure 6 est une vue en perspective d'un autre exemple de réalisation dudit module hydraulique.
La figure 7 est une vue en coupe longitudinale des principaux composants fonctionnels du module.
La figure 8 est une vue de face, en coupe et à caractère schématique, montrant l'implantation d'un module hydraulique sur une roue de véhicule.
La figure 9 est une vue en perspective, avec coupes partielles, montrant cette implantation avec plus de détails.
La figure 10 est une vue à caractère schématique illustrant un exemple de direction hydraulique de véhicule réalisée conformément à l'invention.
Les figures 11 A, 11B sont des vues à caractère schématique illustrant l'angle de braquage limité qu'il est possible d'obtenir avec une direction hydraulique classique.
Les figures 12A, 12B sont des vues à caractère schématique montrant des angles de braquage importants qu'il est possible d'obtenir avec la direction hydraulique selon l'invention.
Les figures 12C et 12D sont des vues schématiques montrant la position des modules et des crémaillères de ces derniers, lors d'un déplacement d'un véhicule en ligne droite.
Les figures 12E et 12F sont de vues schématiques analogue aux figures 12C et 12D et montrant la position des modules et des crémaillères lors d'un braquage à gauche.
Les figures 13A, 13B, 13C, illustrent le fonctionnement des moyens équipant les modules d'une direction hydraulique dans le but d'obtenir un réglage de la valeur de l'angle de braquage des roues directrices d'un véhicule.
Les figures 14A, 14B, 14C, sont des vues de détail, en coupe axiale illustrant les moyens de réglage de la butée d'un module.
Les figures 15A, 15B, 15C, sont des vues de détail, en coupe axiale, représentant le fonctionnement des butées.

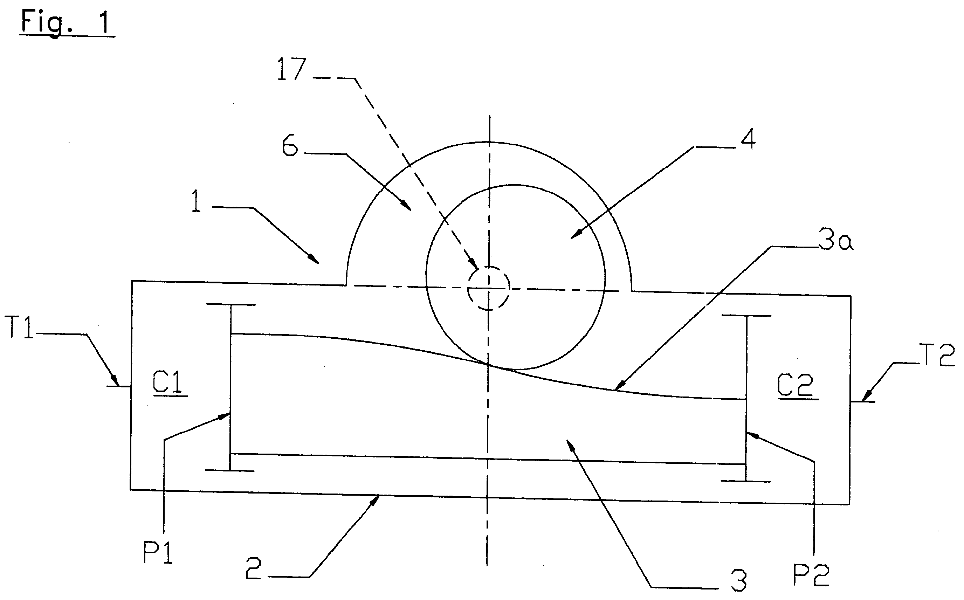

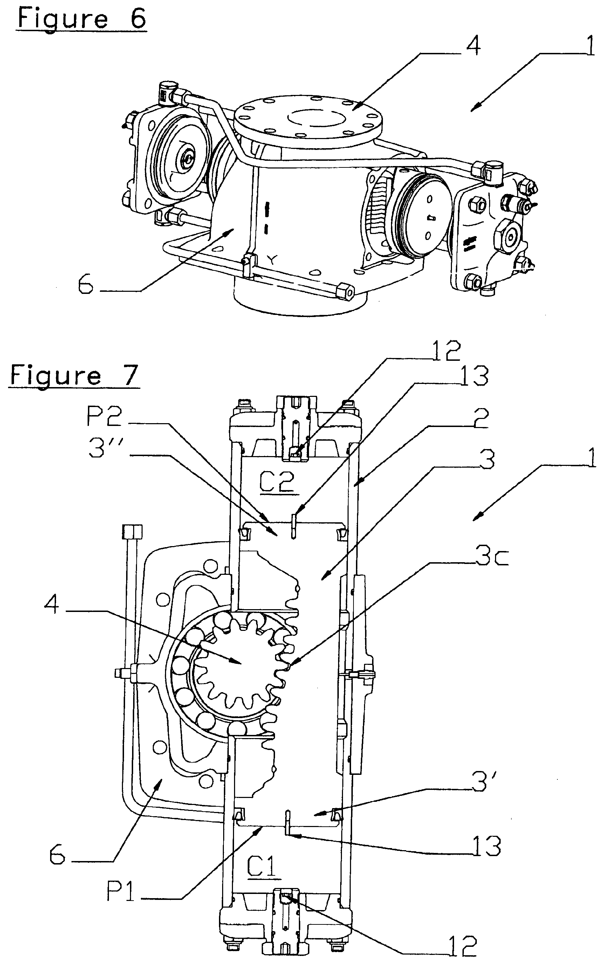

On se reporte auxdits dessins, pour décrire des exemples intéressants, quoique nullement limitatifs de réalisation d'une direction hydraulique de véhicules ou engins automoteurs comprenant au moins deux modules hydrauliques identiques 1a, 1b dont des exemples sont représentés aux figures 1 à 9.

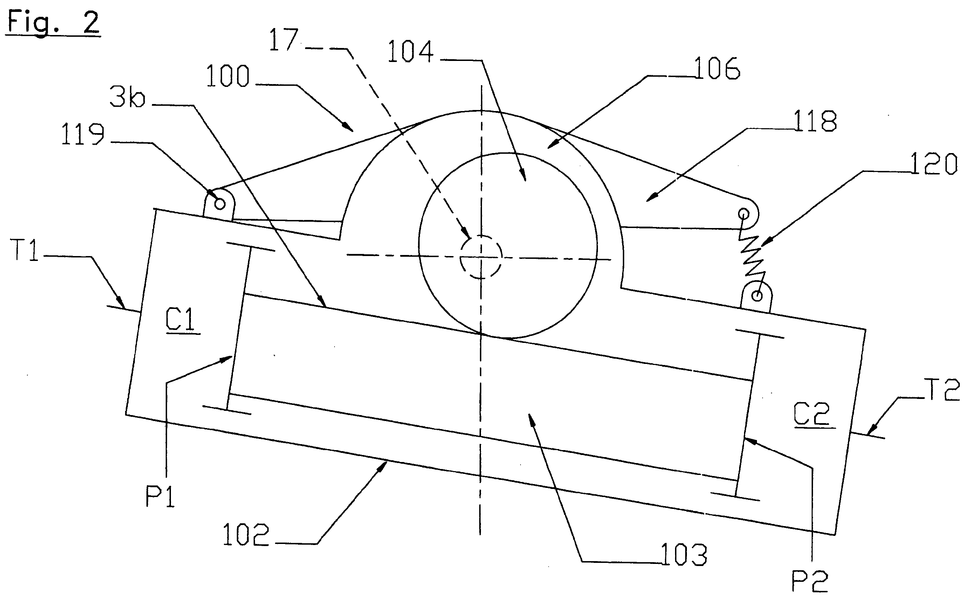

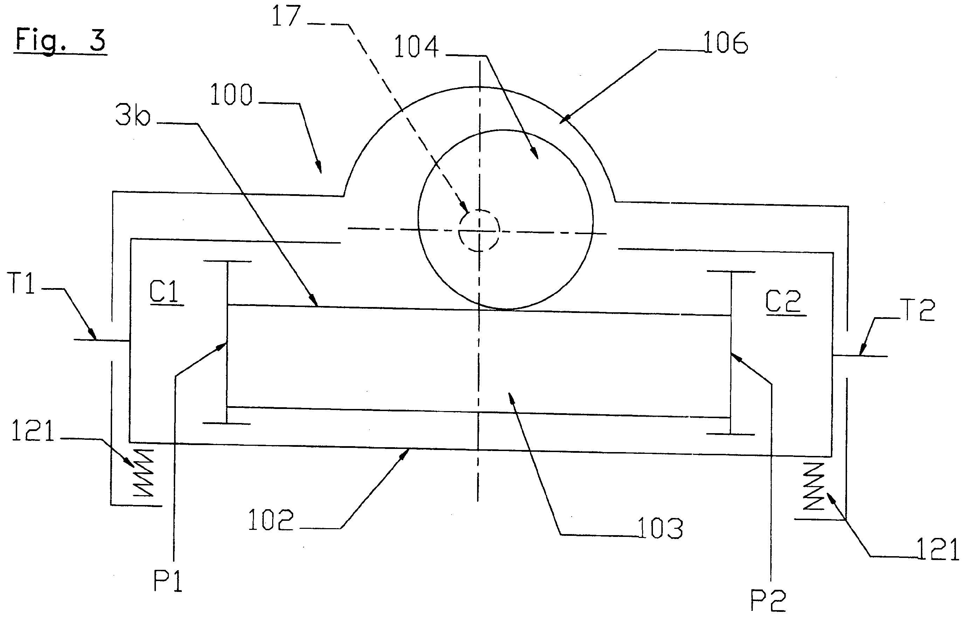

Chaque module hydraulique 1, 100, 200, 300, est notamment remarquable en ce qu'il comprend, d'une part, au moins une crémaillère 3, 103, 203, 303a, 303b logée avec une aptitude de translation longitudinale dans un corps de module 6, 106, 206, 306 et dont la denture 3a ou 3b présente un profil linéaire variable (figures 1, 4, 5) ou un profil linéaire rectiligne (figures 2 et 3), et, d'autre part, un pignon circulaire excentré 4, 104 ou présentant une forme de came, engrenant avec cette crémaillère, laquelle est assujettie à un piston double P1, P2; P3, P4 ; P5, permettant de lui communiquer des mouvements de translation longitudinaux, ladite crémaillère 3, 103, 203, 303a, 303b et ledit pignon 4, 104 étant conformés et conjugués, de sorte que tout mouvement de translation de la crémaillère, à partir de l'introduction, à débit constant, d'un fluide hydraulique dans l'une des chambres à volume variable C1, C2 ; C3, C4 ; C5, C6 ; délimitées par les faces actives dudit piston double P1, P2 ; P3, P4 ; P5, génère un mouvement de rotation d'amplitude variable dudit corps de module 6, 106, 206, 306 ou dudit pignon 4, 104, l'élément ainsi animé (corps de module 6, 106, 206, 306 ou pignon 4, 104), pouvant être relié à un organe pivotant de la roue d'un véhicule V, tandis que l'élément non rotatif (pignon 4, 104 ou corps de module 6, 106, 206, 306) pouvant être rattaché à un élément fixe du châssis dudit véhicule.

Selon les modes de réalisation illustrés aux figures 1, 2, 3 et 5, la crémaillère 3, 103, 303a, 303b est constituée par l'élément intermédiaire ou tige reliant les pistons P1 et P2 ou P3 et P4 formant les extrémités de l'ensemble mobile d'un vérin à crémaillère et à double effet, cet ensemble étant logé avec une aptitude de coulissement étanche dans un corps de vérin cylindrique 2, 102, 302a, 302b.

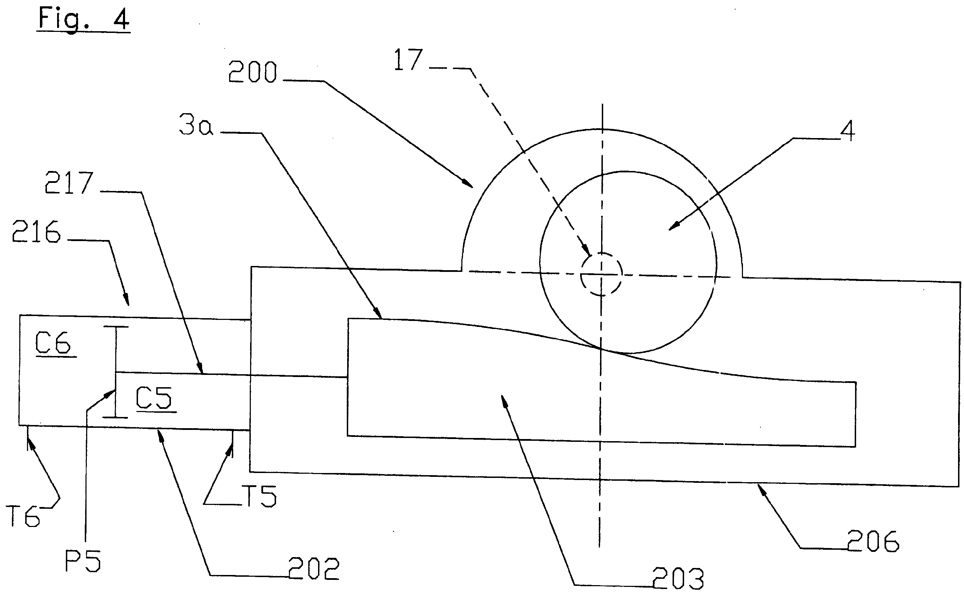

Selon un autre mode de réalisation représenté à la figure 4, l'une des extrémités de la crémaillère 203 est reliée au piston à double effet P5 logé avec une aptitude de coulissement étanche dans le corps 202 d'un vérin hydraulique 216 par l'intermédiaire de la tige 217 du piston dudit vérin.

Selon ce mode d'exécution, le vérin hydraulique 216 se trouve disposé à l'extérieur du logement de forme allongée du corps de module 206 dans lequel est montée la crémaillère 203 avec une latitude de mouvement longitudinal. Dans ce cas, le vérin hydraulique 216 est positionné dans le prolongement dudit logement et s'étend à l'extérieur à partir de l'une des extrémités de ce dernier. Le vérin 216 comprend un unique piston P5 à double face apte à se déplacer par coulissement étanche dans un corps de vérin 202 et délimitant des chambres C5, C6.

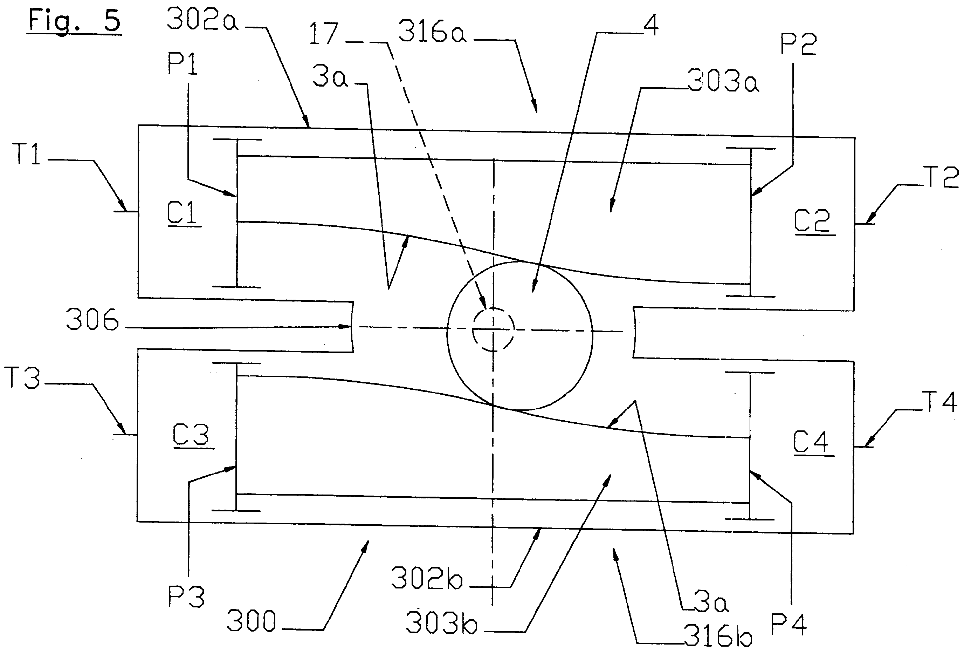

Selon un autre mode d'exécution représenté à la figure 5, le pignon excentré 4 est en prise avec les dentures à profil variable de deux crémaillères inversement orientées 303a, 303b. Dans ce cas, le module comprend deux vérins hydrauliques parallèles 316a, 316b comportant chacun deux pistons P1, P2 ; P3, P4 fixés aux extrémités d'une crémaillère linéaire 303a ou 303b, à profil variable 3a ou rectiligne. Les ensembles mobiles piston P1-crémaillère 303a - piston P2 et piston P3-crémaillère 303b-piston P4 étant montés avec une aptitude de coulissement étanche dans des corps de vérin cylindriques jumelés 302a, 302b, les deux vérins jumelés 316a, 316b étant dotés de caractéristiques de fonctionnement identiques. Les pignons P1 à P4 délimitent des chambres à volumes variables, C1 à C4 respectivement.

Ce mode de réalisation a notamment pour avantages :
- une pression moins importante dans chacune des chambres délimitées par les pistons ;
- de répartir les efforts exercés sur les dentures des crémaillères 303a et 303b.

Selon le mode d'exécution illustré aux figures 1, 4 et 5, la denture 3a de la crémaillère 3, 203, 303a, 303b, des pistons double à crémaillère P1-3-P2 ; P1-303a-P2 ; P3-303b-P4 ou reliée au piston à double effet P5 présente un profil variable.

Suivant un autre mode d'exécution, représenté aux figures 2 et 3, la denture 3b de la crémaillère du piston double à crémaillère P1-103-P2 présente un profil rectiligne.

Selon l'exemple de réalisation illustré à la figure 2, le pignon 104 est maintenu en prise avec la denture 3b de la crémaillère 103 du piston double à crémaillère P1-103-P2 par l'intermédiaire de moyens élastiques.

Selon cette figure, ces moyens sont constitués par des ressorts agissant en traction. Dans ce cas, l'axe 17 du pignon 104 est porté par une potence basculante 118 fixée au corps du module 106 , par l'intermédiaire de l'une de ses extrémités et au moyen d'une articulation 119, et dont l'autre extrémité opposée est reliée au corps de module par un ou plusieurs ressorts 120 agissant en traction.

Selon la figure 3, les moyens élastiques assurant le maintien de l'engrènement du pignon 104 et de la denture 3b de la crémaillère 103 du pignon double P1-103-P2 sont constitués par un ou plusieurs ressorts 121 agissant en compression.

Sur les schémas des figures 1, 2 et 3, les références T1 et T2 désignent les extrémités des tuyauteries communiquant avec les chambres C1 et C2, respectivement. Sur le schéma de la figure 4, les références T5 et T6 désignent les extrémités des tuyauteries communiquant avec les chambres C5 et C6, respectivement. Sur le schéma de la figure 5, les références T1, T2, T3 et T4 désignent les extrémités des tuyauteries communiquant avec les chambres C1, C2, C3 et C4, respectivement.

Selon les exemples d'exécution illustrés aux figures 1 à 9, considérés dans leur application à la réalisation d'une direction hydraulique de véhicule V, selon l'invention, cette direction hydraulique comprend au moins deux modules hydrauliques 1a, 1 b comportant, chacun :
- un corps de module 6,106, 206, 306 ;
- au moins un vérin hydraulique à double effet comportant un corps cylindrique creux et de forme allongée 2, 102, 202, 302 dans lequel est logé, avec une aptitude de coulissement étanche, un piston double comportant une crémaillère linéaire à profil variable ou crémaillère came 3, 203, 303a, 303b (figures 1, 4 et 5) ou à profil rectiligne 103 (figures 2 et 3). Ledit piston double à crémaillère délimite deux chambres opposées C1, C2 ; C3, C4 et C5, C6 à l'intérieur dudit corps, dont les extrémités opposées sont munies d'une ouverture (non représentée) communiquant avec lesdites chambres, l'une de ces chambres est raccordée à un distributeur hydraulique permettant de commander l'entrée ou la sortie du fluide hydraulique et l'autre permet, simultanément et inversement l'évacuation ou l'entrée d'un volume égal dudit fluide hydraulique ; et,
- un pignon 4, 104 excentré par rapport à l'axe de rotation du corps de module, engrenant avec la crémaillère à profil variable ou rectiligne reliée audit piston double.

De manière préférée, le pignon cylindrique excentré ou à profil de came 4, 104 est rigidement solidaire d'un élément fixe du châssis du véhicule, tandis que le corps de module 6, 106, 206, 306 mobile autour d'un axe de rotation, est relié fixement à l'une des roues directrices 5a, 5b au véhicule V.

Inversement, le corps de module 6, 106, 206, 306 pourrait être rigidement solidaire d'un élément fixe du châssis du véhicule V, tandis que le pignon cylindrique excentré ou à profil de came 4, 104 serait, dans ce cas, relié fixement à l'une des roues directrices 5a ou 5b dudit véhicule V.

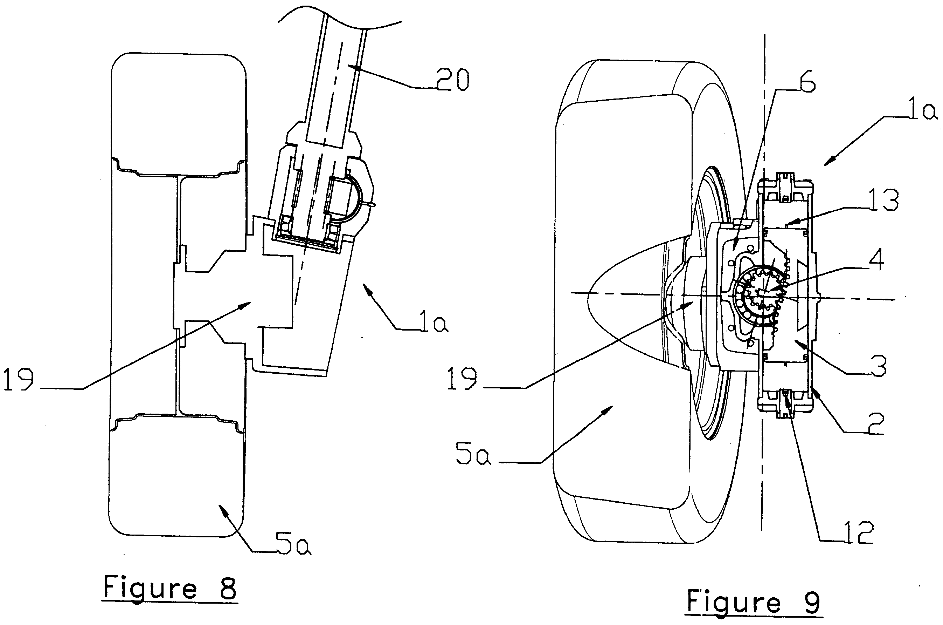

Dans l'application à la direction hydraulique de véhicules V, le corps de module 6, 106, 206, 306 est fixé rigidement à l'une des roues directrices 5a ou 5b dudit véhicule par exemple par l'intermédiaire d'un bâti en rotation 19 (figures 8 et 9). D'autre part, le pignon 4, 104 engrenant avec la denture 3a, 3b de la crémaillère 3, 103, 203, 303a, 303b de l'ensemble mobile P1-3-P2 ou P1-103-P2 ou P5-203 ou P1-303a-P2, P3-303b-P4 de chaque vérin, est rigidement fixé sur un élément du châssis du véhicule V, par exemple sur une jambe fixe 20, par exemple par l'intermédiaire de son axe 17.

On conçoit que lorsque le piston à crémaillère P1-3-P2 ou P1-103-P2 ou P5-203 ou P1-303a-P2, P3-303b-P4, est déplacé dans le corps 2, 102, 202, 302a-302b de l'un des vérins à crémaillère, par l'intermédiaire d'un déplacement d'une quantité de fluide hydraulique contenu dans les chambres C1 et C2, C3 et C4 ou C5 et C6 dudit vérin, ce déplacement génère un pivotement de ladite crémaillère autour du pignon 4, 104 et, par conséquent, un pivotement de l'ensemble 3-6 relié à la roue 5a ou 5b, assurant la rotation de ladite roue et générant ainsi un braquage à droite ou à gauche de cette dernière selon le sens du pivotement dudit ensemble 3-6.

On comprend aussi que la combinaison de la géométrie particulière de la crémaillère du piston et de celle du pignon, associé à l'excentration dudit pignon par rapport à l'axe de rotation du module, permet d'assurer la variation d'angle nécessaire au niveau de chacune des roues pour satisfaire l'épure de Jeantaud en tout point lors du braquage.

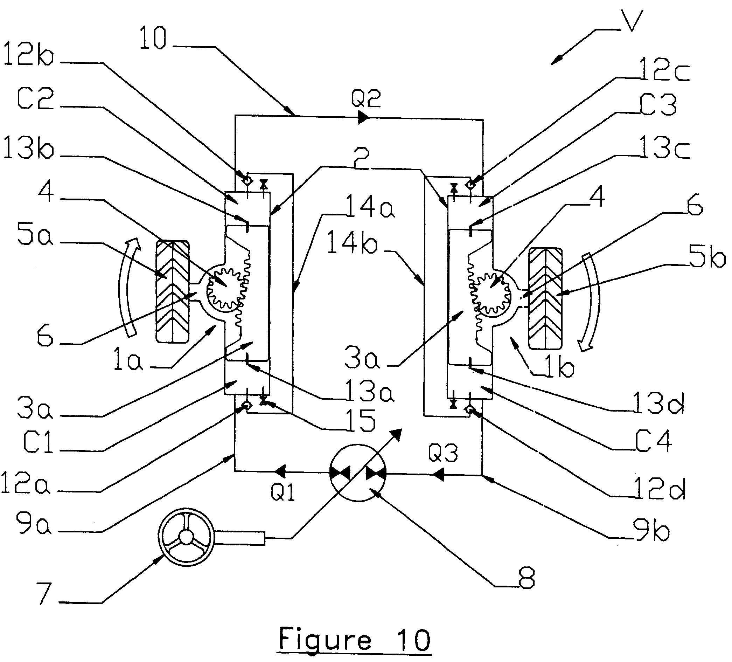

Un exemple de réalisation de la direction hydraulique du véhicule est illustré à la figure 10. Selon cet exemple, la direction hydraulique comprend un volant de manoeuvre 7 commandant le fonctionnement d'un distributeur hydraulique rotatif 8 et cette direction hydraulique est notamment remarquable en ce qu'elle comprend au moins deux modules hydrauliques 1a et 1b comportant les caractéristiques susmentionnées.

Ces modules 1a et 1b assurent le braquage d'au moins deux roues directrices 5a et 5b du véhicule V ou engin automoteur. Ils sont disposés de part et d'autre de l'axe du véhicule et, selon l'exemple avantageux illustré aux figures 8 et 9, chacun d'eux est relié, d'une part par l'intermédiaire de son ensemble pivotant 3-6 à l'une des roues 5a ou 5b et, d'autre part, fixé rigidement par l'intermédiaire du pignon 4, sur le châssis du véhicule V ou sur un élément rigidement solidaire dudit châssis (non représenté).

Toutefois, il serait aussi possible de relier chaque module 1 a et 1 b, d'une part, par l'intermédiaire du pignon 4, à l'une des roues 5a ou 5b, et, d'autre part, de fixer rigidement l'ensemble 3-6 sur le châssis du véhicule V ou sur un élément rigidement solidaire dudit châssis.

On se réfère au schéma de la figure 10 pour décrire le fonctionnement des modules 1 a, 1 b dans l'application à la direction hydraulique d'un véhicule V. Ce fonctionnement est assuré par le distributeur hydraulique 8 qui est relié à l'une des chambres C1, ou C4 desdits modules au moyen de canalisations appropriées 9a, 9b, respectivement.

Les chambres opposées C2 et C3 des modules 1a, 1b, respectivement, sont reliées entre elles au moyen d'une canalisation 10.

Avantageusement, le distributeur 8 est constitué par un distributeur hydrostatique et plus précisément par un distributeur hydrostatique rotatif.

Par exemple, ce distributeur est constitué par un dispositif de servocommande hydrostatique rotatif, connu en soi sous le nom d'« orbitrol ».

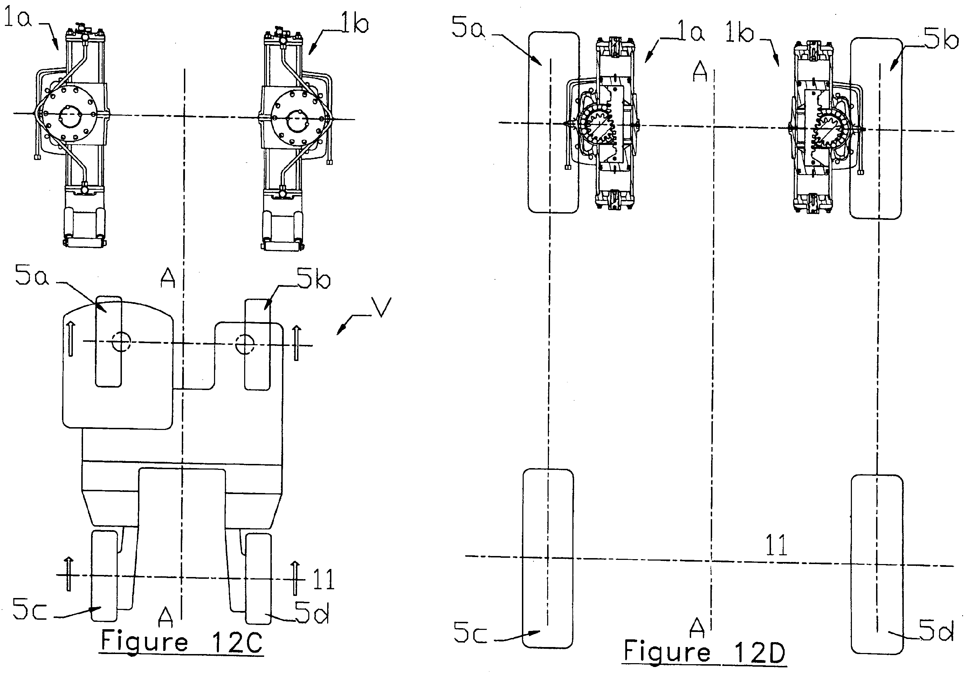

Lorsque le milieu du piston à crémaillère 3 se trouve placé en coïncidence avec le milieu du corps de vérin 2, il délimite, à l'intérieur de ce dernier, deux chambres C1 et C2 ou C3 et C4 de sections et longueurs identiques et par conséquent de volumes égaux. Dans cette position, les roues directrices 5a, 5b, du véhicule V se trouvent orientées parallèlement à l'axe A-A de celui-ci et l'angle du rayon de braquage desdites roues est nul (figure 12D). Toutefois, cette orientation des roues directrices pourrait être obtenue autrement que par la position susmentionnée du piston à crémaillère dans le corps de vérin.

Lorsque le conducteur du véhicule tourne le volant de manoeuvre 7 de la direction hydraulique, par exemple pour obtenir un virage à droite du véhicule, ledit volant actionne les modules hydrauliques 1a, 1b, par l'intermédiaire du distributeur hydraulique 8 connecté directement auxdits modules.

En considérant l'exemple représenté à la figure 10, le distributeur hydraulique 8 permet, lors de la rotation du volant 7 vers la droite, d'adresser un volume d'huile Q1, dans la chambre C1 du module de direction 1a relié à la roue gauche 5a du véhicule V, en poussant ainsi le piston à crémaillère 3 de ce module vers l'avant. Il en résulte qu'un volume de fluide hydraulique Q2, issu de la chambre C2 du module 1 a est transféré dans la chambre C3 du module hydraulique 1 b relié à la roue droite 5b de l'engin, ce qui entraine le déplacement du piston à crémaillère 3 dudit module 1 b vers l'arrière. Il en résulte aussi, qu'un volume d'huile Q3 est évacué de la chambre C4 du module 1b et retourne vers le distributeur hydraulique 8 relié au volant de manoeuvre 7.

Les sections des quatre chambres C1, C2, C3, C4 étant identiques par construction, on comprend que Q1 = Q2 = Q3. De plus, le déplacement vers l'avant du piston double à crémaillère P1-3-P2 du module 1a, relié à la roue gauche 5a du véhicule V génère une rotation de la crémaillère 3 de ce piston double autour du pignon excentré 4, lequel est fixe par rapport au châssis du véhicule, l'engrènement de la crémaillère 3 et dudit pignon fixe forçant le corps de module 6 du module de direction et donc également la roue 5a à opérer une rotation vers la droite, d'autre part, le déplacement, vers l'arrière, du piston double à crémaillère P1-3-P2 du module 1b relié à la roue droite 5b du véhicule V, résultant de l'introduction d'un volume d'huile dans la chambre C3 du module de direction 1b, entraîne le pivotement de la roue 5b vers la droite et par conséquent la rotation globale du véhicule vers la droite.

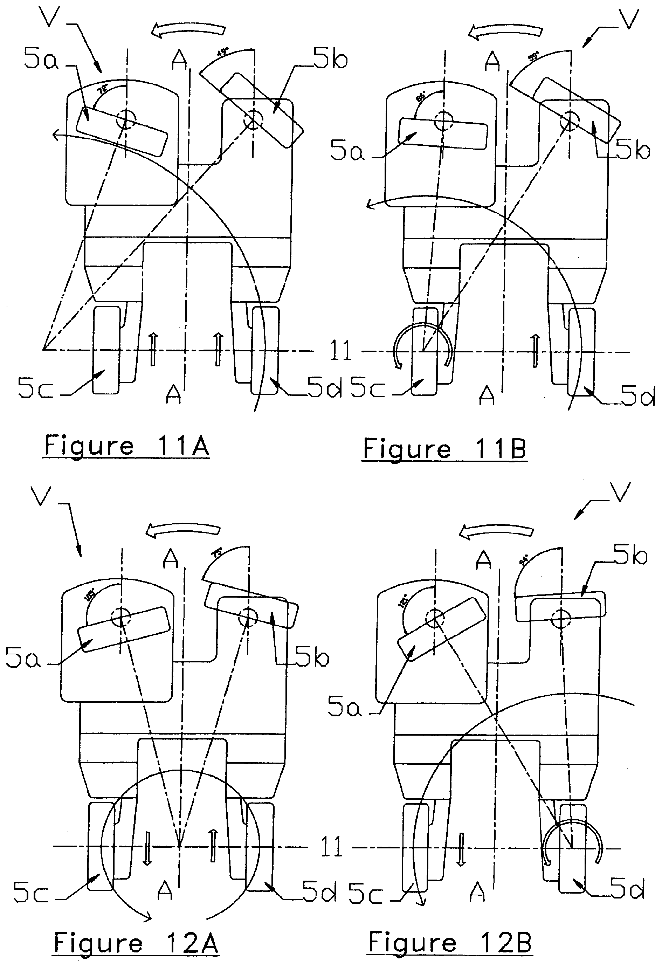

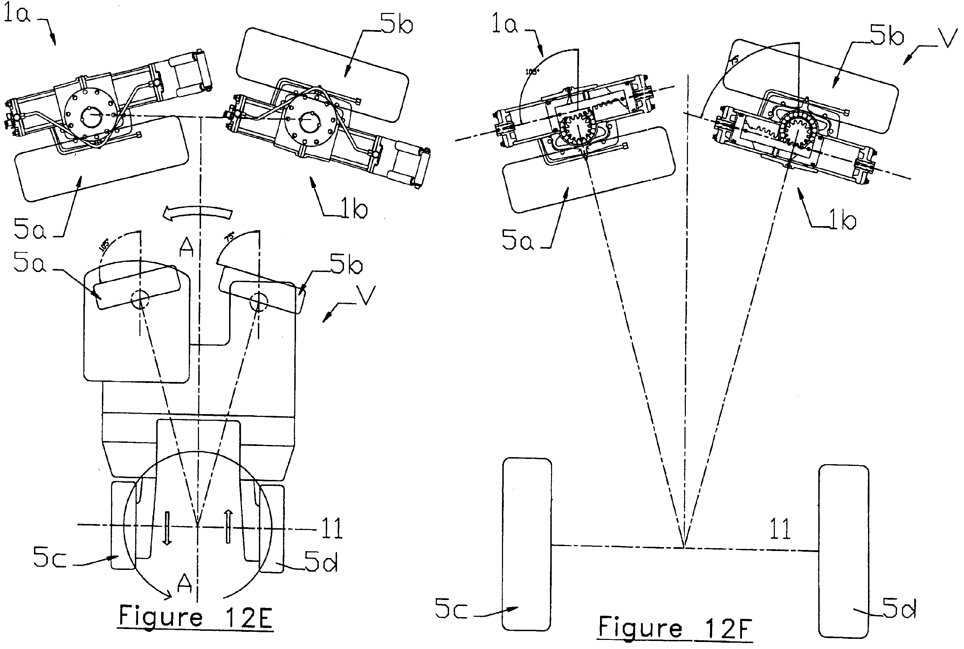

Les figures schématiques 11 A, 11B, montrent les angles de braquage d'amplitudes limités qu'il est possible d'obtenir avec une direction hydraulique classique. Sur ces figures et sur les schémas des figures 12A, 12B, 12C, 12D, 12E et 12F, les références 5c et 5d désignent les roues arrière non directrices du véhicule V.

La figure 11A illustre le braquage "normal" à gauche d'un engin équipé d'une direction hydraulique classique avec le centre de rotation de la machine à gauche de la machine sur l'essieu arrière. La roue arrière droite 5d tourne dans le sens de l'avancement, tout comme les deux roues avant. La roue arrière gauche 5c tourne aussi dans le sens de l'avancement. Si les voies avant et arrière sont égales, l'angle de braquage de la roue gauche est inférieur à 90°.

La figure 11 B montre un braquage "maximum" à gauche d'un engin avec le centre de rotation de la machine sur l'essieu arrière, sur le centre de la roue arrière gauche. La roue arrière droite 5d tourne dans le sens de l'avancement, tout comme les deux roues avant. La roue arrière gauche 5c est statique. Si les voies avant et arrière sont égales, l'angle de braquage de la roue gauche est égal à 90°.

Les figures 12A, 12B, sont des vues schématiques montrant des angles de braquage importants qu'il est possible d'obtenir avec la direction hydraulique selon l'invention.

Les figures 12E et 12F sont des vues identiques à la figure 12A, mais avec illustration des modules et de la position des crémaillères, la figure 12D représentant une visualisation de la machine en ligne droite et une visualisation des crémaillères dans cette position.

Les figures 12E et 12F montrent bien que le système de direction hydraulique selon l'invention est parfaitement adapté pour réaliser des braquages des roues directrices 5a, 5b, des véhicules ou autres engins automoteurs, avec des angles qui peuvent être nettement supérieurs à 90° par rapport à l'axe desdits véhicules. Cette direction hydraulique peut permettre de positionner notamment le rayon de braquage au centre de l'essieu arrière 11 d'un véhicule V (figures 12A, 12E et 12F) représentant le plus petit rayon de braquage possible de ce type de véhicule. Comparée aux limites de l'angle de braquage qu'il est possible d'obtenir avec une direction hydraulique classique telle que représentée à la figure 11B (roue gauche braquée selon un angle de 86°, roue droite braquée selon un angle de 59°), la direction hydraulique selon l'invention procure la possibilité d'avoir des angles de braquage très importants permettant de réaliser des changements de direction avec de grands angles de braquage, nécessitant ainsi un espace au sol minimisé dans les manoeuvres.

L'angle maximal du braquage des roues est défini simplement par la longueur de la crémaillère, celle du piston vérin, couplées aux paramètres de forme, cylindrique ou a profil de came, ainsi qu'à l'excentration du pignon par rapport à l'axe de rotation du module que l'on pourrait dimensionner pour obtenir un tour complet, voire plusieurs tours des modules, ceci étant toutefois inutiles dans l'application d'une direction hydraulique visée par l'invention.

La direction hydraulique selon l'invention comprend des moyens permettant de régler la valeur de l'angle de braquage maximale des roues directrices 5a, 5b.

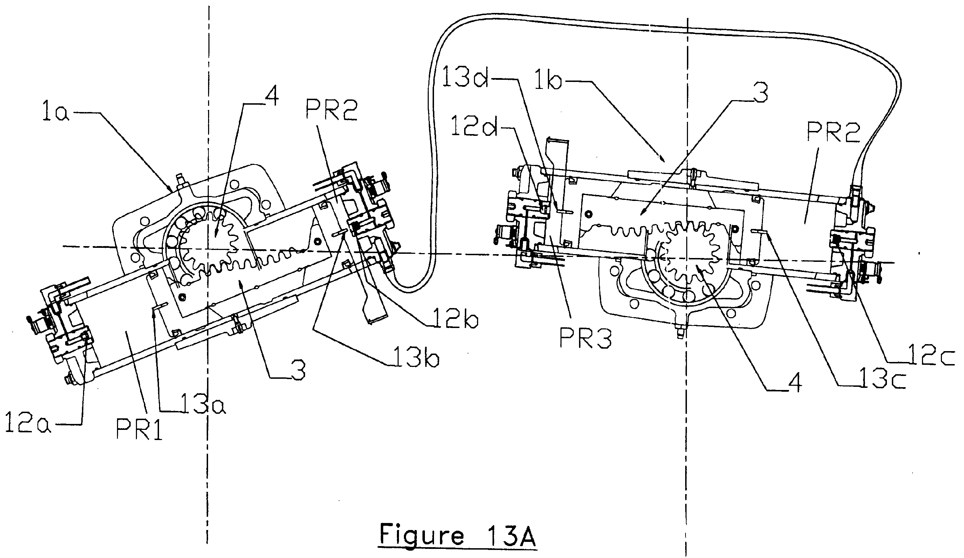

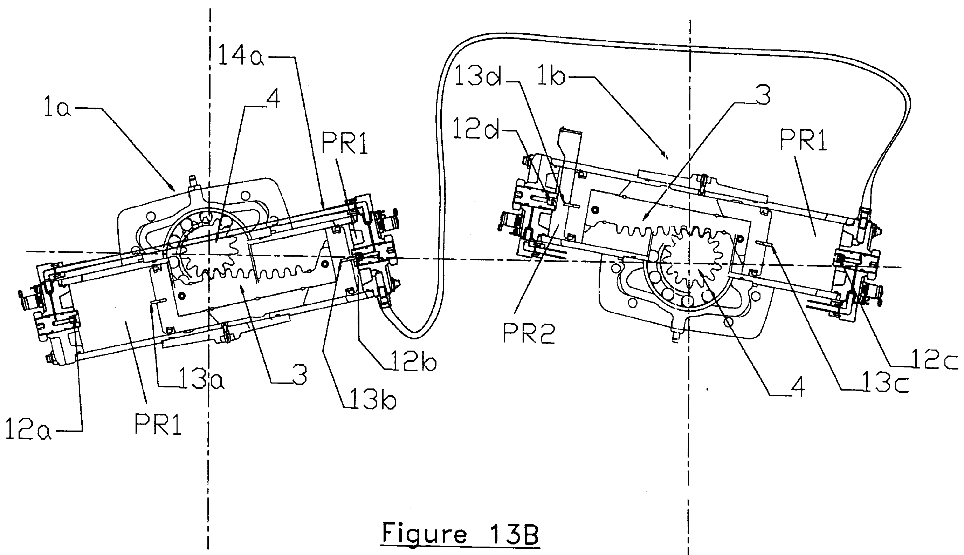

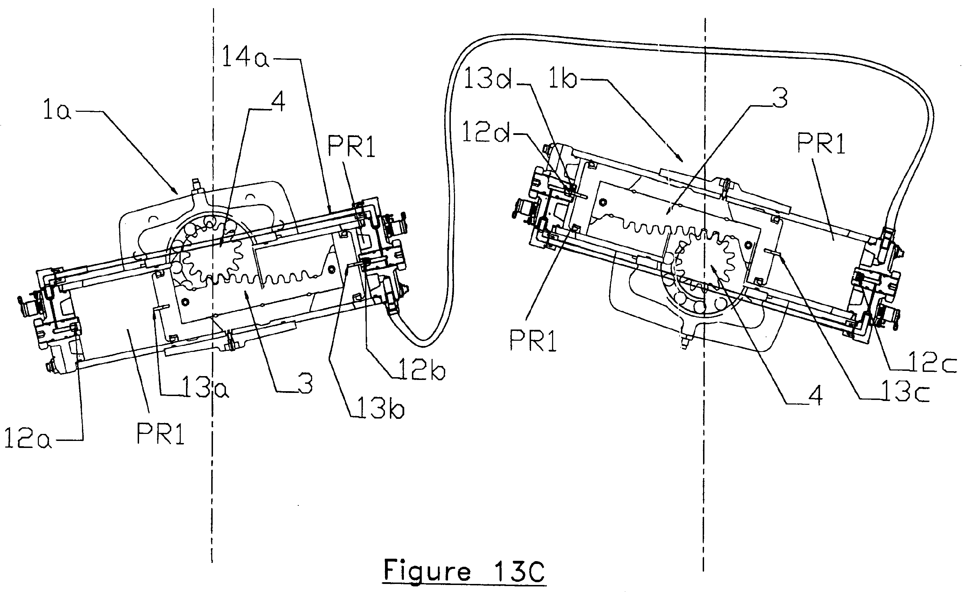

Ces moyens comprennent (figures 13A, 13B et 13C) :
- d'une part, des clapets anti-retour 12 (12a, 12b, 12c, 12d), dont sont munies, de préférence axialement, les extrémités opposées du corps de vérin 2 des modules 1a et 1b, et,
- d'autre part, une tige ou pointeau 13 (13a, 13b, 13c, 13d), portée par les extrémités opposées 3', 3", du piston à crémaillère 3, de préférence axialement, cette tige ou pointeau étant orientée, en direction des extrémités du corps de vérin 2.

De la sorte, lesdits clapets anti-retour 12 et lesdits pointeaux 13 se trouvent disposés en alignement.

En fin de course, et selon son sens de déplacement, le piston 3, par l'intermédiaire de l'un des pointeaux 13 actionne le clapet anti-retour correspondant disposé face audit pointeau.

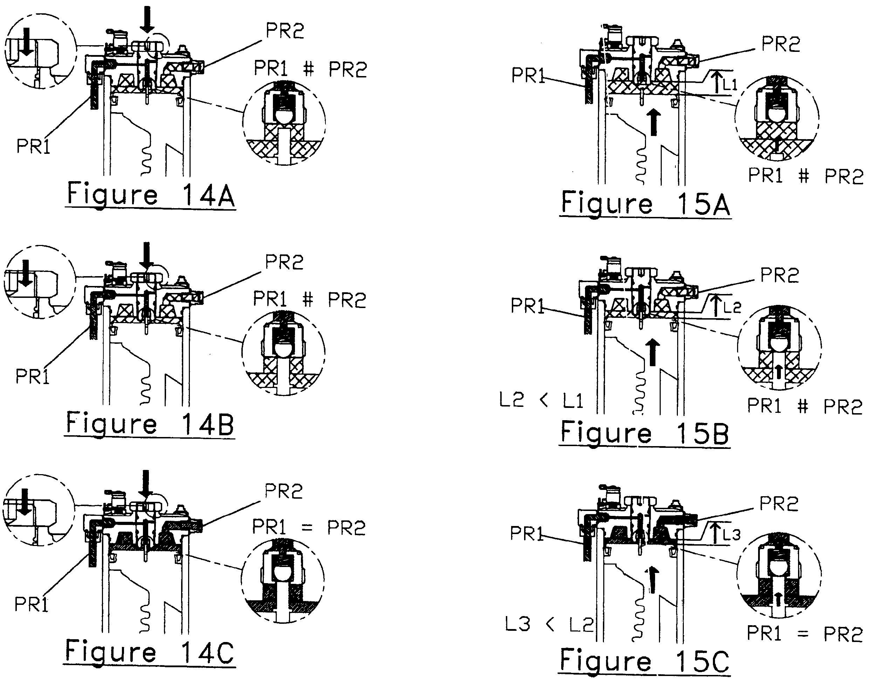

Les clapets anti-retour (respectivement 12a-12b et 12c-12d) équipant les extrémités du module de gauche 1a et du module de droite 1b sont montés de manière réglable axialement à l'aide de moyens appropriés connus en soi, par exemple un système vis-écrou. De la sorte, l'angle de braquage maximal peut être géré par un réglage en translation de la position des clapets anti-retour. Le réglage initial du parallélisme s'opère simplement par le réglage desdits clapets anti-retour. Les figures 14A, 14B et 14C illustrent l'exemple d'un réglage en réduction de l'angle de braquage maximal en positionnant la crémaillère dans une position non extrême (figure 14A) puis en réglant en translation la position du clapet vers l'intérieur du corps de vérin de façon à rencontrer ladite tige ou ledit pointeau (figure 14B) et continuer l'action de façon à actionner ledit clapet en fin de course (figure 14C).

Le fonctionnement de ces moyens de butée réglable permettant de régler l'angle maximal de braquage des roues directrices du véhicule V est le suivant en se référant aux figures 13A à 13C les figures 15A, 15B et 15C illustrant le détail du fonctionnement de ces butées.

Sur les figures 13A et 15A, le piston double du module de gauche 1a, et le piston double du module de droite 1 b sont presque arrivés en fin de course suivant laquelle le piston à crémaillère dudit module de gauche est déplacé vers l'avant, alors que :
- la chambre C1 du module 1a est à une pression PR1;
- la chambre C2 du module 1a et la chambre C3 du module 1b sont à une pression PR2 ;
- la chambre C4 dudit module 1 b est à une pression PR3.

Il n'y a pas de possibilité de transfert de fluide entre les chambres C1 et C2, ou C3 et C4, forçant ainsi la mobilité des pistons de chaque module en fonction du débit hydraulique des chambres C1 et C4.

Suivant les figures 13B, 15B le piston double du module de gauche 1a est arrivé en butée de fin de course, et le clapet anti-retour 12b s'est ouvert sous l'action de la tige 13b (figure 15C). La chambre C1 et la chambre C2 sont mises en communication par la canalisation 14a reliant les clapets anti-retour (12a-12b) donnant accès auxdites chambres. Dans cette situation :
- la chambre C1 est à une pression PR1 ;
- la chambre C2 et la chambre C3 sont à une pression PR1 ;
- la chambre C4 est à une pression PR2.

Le fluide hydraulique circule désormais directement de la chambre C1 vers la chambre C2 et donc vers la chambre C3, le piston du module de gauche est donc immobilisé.

Selon la figure 13C, le piston du module de droite 1 B continue sa course et arrive en butée de fin de course. Le clapet anti-retour 12d disposé à l'entrée de la chambre C4 se trouvant ouvert par l'action de la tige ou pointeau 13d équipant l'extrémité correspondante du piston 3 dudit module. Dans cette situation, la chambre C3 communique avec la chambre C4 par une canalisation 14b reliant les clapets anti-retour (12c-12d) équipant les extrémités du corps 2 du module 1 b, les quatre chambres C1, C2, C3, C4, sont à la même pression :
- la chambre C1 est à une pression PR1 ;
- la chambre C2 et la chambre C3 sont aussi à une pression PR1;
- la chambre C4 est également à une pression PR1.

Le débit de fluide hydraulique circule désormais librement au travers des chambres C1 à C4, et les pistons doubles à crémaillère de chaque module sont immobilisés, résultant en des angles de braquage différents des modules 1a et 1b.

La référence 15 désigne des clapets permettant la purge du circuit hydraulique du système de direction hydraulique précédemment décrit.

## Revendications

1. Direction hydraulique pour véhicules et engins automoteurs comportant au moins deux roues directrices (5a, 5b) et comprenant un volant de manoeuvre (7) relié à un distributeur hydraulique (8), **caractérisée en ce qu'**elle comprend au moins deux modules hydrauliques (1a, 1b) comprenant chacun,
- d'une part, un corps de module (6, 106, 206, 306), incluant un ensemble constitué d'un piston double (P1-P2 ; P3-P4 ; P5) solidaire en translation d'une crémaillère (3, 103, 203, 303a, 303b), ledit piston double étant logé avec une aptitude de coulissement étanche dans un corps de vérin (2, 102, 202, 302a, 302b) dans lequel il délimite deux chambres opposées (C1, C2 ; C3, C4 ; C5, C6), et,
- d'autre part, un pignon (4, 104), engrenant avec la crémaillère (3, 103, 203, 303a, 303b),
chacun de ces modules hydrauliques (1a, 1b) étant relié, d'une part, par l'intermédiaire de son élément pivotant à l'une des roues directrices (5a, 5b) du véhicule (V) et, d'autre part, par l'intermédiaire de son organe fixe, au châssis dudit véhicule,
et **caracterisé en ce que**
la crémaillère et ledit pignon (4, 104) sont conformés, et conjugués, de sorte que tout mouvement de translation de la crémaillère (3, 103, 203, 303a, 303b) génère, à partir de l'introduction, à débit constant, d'un fluide hydraulique dans l'une des chambres (C1, C2 ; C3, C4 ; C5, C6), un mouvement de rotation d'amplitude variable dudit corps de module (6, 106, 206, 306) ou dudit pignon (4, 104), et **en ce que** ledit distributeur est connecté à l'une (C1 ou C4) des deux chambres (C1, C2 ou C3, C4) délimitées par le piston à crémaillère (3) de chaque module, la seconde (C2, C3) desdites chambres desdits modules communiquant entre elles.

2. Direction hydraulique pour véhicules automobiles et engins automoteurs, **caractérisée en ce que** le corps de chaque module est relié à un organe mobile du véhicule ou de l'engin automoteur, tandis que le pignon est rigidement fixé à un élément fixe dudit véhicule ou dudit engin automoteur.

3. Direction hydraulique pour véhicules automobiles et engins automoteurs, selon la revendication 1, **caractérisée en ce que** le pignon est relié à un organe mobile d'un véhicule ou d'un engin automoteur, tandis que le corps de module est solidarisé à un élément fixe dudit véhicule ou dudit engin automoteur.

4. Direction hydraulique pour véhicules automobiles et engins automoteurs, selon l'une quelconque des revendications 1 à 3, **caractérisée en ce que** la crémaillère (3, 103, 303a, 303b) est constituée par un élément intermédiaire disposé entre les deux pistons (P1, P2 ou P3, P4) de l'ensemble mobile d'un vérin hydraulique à crémaillère.

5. Direction hydraulique pour véhicules automobiles et engins automoteurs, selon l'une quelconques des revendications 1 à 3, **caractérisée en ce que** l'une des extrémités de la crémaillère (203) est reliée au piston à double effet P5 d'un vérin hydraulique (216) par l'intermédiaire de la tige (217) du piston (P5) dudit vérin (216) lequel est positionné à l'extérieur et dans le prolongement longitudinal du logement dans lequel est montée ladite crémaillère (203).

6. Direction hydraulique pour véhicules automobiles et engins automoteurs, selon l'une quelconque des revendications 1 à 3, **caractérisée en ce que** le pignon (4) est en prise avec les dentures (3a) de deux crémaillères (303a, 303b) parallèles, inversement orientées.

7. Direction hydraulique pour véhicules automobiles et engins automoteurs, selon l'une quelconque des revendications 1 à 6, **caractérisée en ce que** la denture (3a) de la crémaillère (3, 203, 303a, 303b) présente un profil linéaire variable.

8. Direction hydraulique pour véhicules automobiles et engins automoteurs, selon l'une quelconque des revendications 1 à 6, **caractérisée en ce que** la denture (3b) de la crémaillère (103) présente un profil linéaire rectiligne.

9. Direction hydraulique pour véhicules automobiles et engins automoteurs, selon l'une quelconque des revendications 1 à 8, **caractérisée en ce que** le pignon (4, 104) est un pignon circulaire monté de manière excentrée.

10. Direction hydraulique pour véhicules automobiles et engins automoteurs, selon l'une quelconque des revendications 1 à 8, **caractérisée en ce que** le pignon (4, 104) est un pignon présentant un profil ou pourtour en forme de came.

11. Direction hydraulique pour véhicules automobiles et engins automoteurs, selon l'une quelconque des revendications 1 à 10, **caractérisée en ce que** le pignon est porté par un axe occupant une position variable par rapport à la denture de la crémaillère.

12. Direction hydraulique pour véhicules automobiles et engins automoteurs, selon l'une quelconque des revendications 1 à 11, **caractérisée en ce qu'**il comprend des moyens élastiques (120, 121) maintenant en prise le pignon avec la denture de la crémaillère.

13. Direction hydraulique pour véhicules automobiles et engins automoteurs, selon la revendication 12, **caractérisée en ce que** les moyens élastiques sont constitués par des ressorts (120) agissant en traction.

14. Direction hydraulique pour véhicules automobiles et engins automoteurs, selon la revendication 12, **caractérisée en ce que** les moyens élastiques sont constitués par des ressorts (121) agissant en compression.

15. Direction hydraulique pour véhicules automobiles et engins automoteurs, selon l'une quelconque des revendications 1 à 14, **caractérisée en ce que** le pignon cylindrique excentré ou à profil de came (4, 104) a une position fixe et le corps de module (6, 106, 206, 306) est pivotant.

16. Direction hydraulique pour véhicules automobiles et engins automoteurs, selon l'une quelconque des revendications 1 à 15, **caractérisée en ce que** le corps de module (6, 106, 206, 306) a une position fixe et le pignon cylindrique excentré ou à profil de came (4, 104) est pivotant.

17. Direction hydraulique pour véhicules et engins automoteurs, selon l'une quelconque des revendications 1 à 16, **caractérisée en ce que** le corps de module (6, 106, 206, 306) de chaque module (1a, 1b) est pivotant et relié à l'une des roues directrices (5a, 5b) dudit véhicule (V), tandis que le pignon cylindrique excentré (4, 104) ou à profil de came, dudit module, est assujetti fixement au châssis du véhicule.

18. Direction hydraulique pour véhicules et engins automoteurs, selon l'une quelconque des revendications 1 à 17, **caractérisée en ce que** le corps de module (6, 106, 206, 306) de chaque module (1a, 1b) est fixe et rigidement solidaire du châssis du véhicule (V), tandis que le pignon cylindrique excentré (4, 104) ou à profil de came dudit module est relié fixement à l'une des roues (5a, 5b) du véhicule.

19. Direction hydraulique pour véhicules et engins automoteurs, selon l'une quelconque des revendications 1 à 18, **caractérisée en ce que** le distributeur hydraulique (8) est constitué par un distributeur hydraulique rotatif tel que par exemple un dispositif de servocommande hydrostatique connu en soi sous le nom d'orbitrol.

20. Direction hydraulique pour véhicules et engins automoteurs selon l'une quelconque des revendications 1 à 19, **caractérisée en ce que** chaque module comporte un système de butée (12,13) réglable en translation pour régler l'angle de braquage maximal.

21. Direction hydraulique pour véhicules et engins automoteurs selon la revendication 20, **caractérisée en ce qu'**elle comprend un clapet anti-retour (12) positionné de manière réglable axialement aux extrémités du corps (2) du vérin à crémaillère (2, 3) et disposé en regard d'une tige ou pointeau (13) lié au piston à crémaillère (3) actionnant, en fin de course, ledit clapet anti-retour.

## Patentansprüche

1. Hydraulische Lenkung für selbstfahrende Fahrzeuge und Maschinen, die mindestens zwei lenkbare Räder (5a, 5b) aufweisen und mit einem Lenkrad (7) mit einem Hydraulikverteiler (8) verbunden sind, **dadurch gekennzeichnet, dass** sie mindestens zwei Hydraulikmodule (1a, 1b) umfasst, mit jeweils
- auf der einen Seite einem Modulkörper (6, 106, 206, 306), einschließlich einer Anordnung, bestehend aus einem Doppelkolben (P1-P2; P3-P4, P5), die kraftschlüssig mit einer Zahnstange (3, 103, 203, 303a, 303b) verbunden ist, wobei der Doppelkolben mit einer gleitenden Dichtfähigkeit in einem Zylinderkörper aufgenommen ist (2, 102, 202, 302a, 302b), in der er zwei gegenüberliegende Kammern (C1, C2; C3, C4, C5, C6) definiert und
- auf der anderen Seite, einem Ritzel (4, 104), die mit der Zahnstange kämmt (3, 103, 203, 303a, 303b) und wobei jedes dieser Hydraulikmodule (1a, 1b) auf der einen Seite mittels ihres Schwenkelementes mit einem der lenkbaren Rädern (5a, 5b) des Fahrzeugs (V) verbunden ist und auf der anderen Seite durch ihr feststehendes Teil mit dem Fahrgestell des Fahrzeugs, **dadurch gekennzeichnet ist, dass**
die Zahnstange und das besagte Ritzel (4, 104) korrespondierend und derart gekoppelt sind, dass jegliche Translationsbewegung der Zahnstange (3, 103, 203, 303a, 303b) durch die Einführung einer konstant fließenden Hydraulikflüssigkeit in eine der Kammern (C1, C2; C3, C4; C5, C6) eine Drehbewegung der Modulkörper (6, 106, 206, 306) oder die Ritzel (4, 104) mit variabler Amplitude bewirkt;
und wobei der besagte Verteiler mit einem (C1 oder C4) der beiden Kammern (C1, C2 oder C3, C4) verbunden ist, begrenzt durch die Zahnstangenkolben (3) jedes Moduls, die zweite (C2, C3) der besagten Kammern der Module miteinander in Verbindung stehen.

2. Hydraulische Lenkung für selbstfahrende Fahrzeuge und Maschinen, **dadurch gekennzeichnet, dass** der Körper jedes Moduls an einem beweglichen Element des selbstfahrenden Fahrzeugs oder der selbstfahrenden Maschine verbunden ist, während das Ritzel fest mit einem feststehenden Element des selbstfahrenden Fahrzeugs oder der selbstfahrenden Maschine verbunden ist.

3. Hydraulische Lenkung für selbstfahrende Fahrzeuge und Maschinen, nach Anspruch 1, **dadurch gekennzeichnet, dass** das Ritzel an einem beweglichen Element des selbstfahrenden Fahrzeugs oder der selbstfahrenden Maschine verbunden ist, während der Körper jedes Moduls integral mit einem feststehenden Element des selbstfahrenden Fahrzeugs oder der selbstfahrenden Maschine ausgebildet ist.

4. Hydraulische Lenkung für selbstfahrende Fahrzeuge und Maschinen, nach einem der Ansprüche 1 bis 3, **dadurch gekennzeichnet, dass** die Zahnstange (3, 103, 303a, 303b) durch ein Zwischenglied, angeordnet zwischen den beiden Kolben (P1, P2 oder P3, P4) des bewegbaren Bauteils des Hydraulikzylinders und der Zahnstange ausgebildet wird.

5. Hydraulische Lenkung für selbstfahrende Fahrzeuge und Maschinen, nach einem der Ansprüche 1 bis 3, **dadurch gekennzeichnet, dass** ein Ende der Zahnstange (203) mit dem doppelwirkenden Kolben (P5) eines Hydraulikzylinders über die Stange (217) des Kolbens (P5) des besagten Zylinders (216) verbunden ist, der außerhalb und in longitudinaler Verlängerung des Gehäuses, in dem die Zahnstange (203) befestigt ist, positioniert ist.

6. Hydraulische Lenkung für selbstfahrende Fahrzeuge und Maschinen, nach einem der Ansprüche 1 bis 3, **dadurch gekennzeichnet, dass** das Ritzel (4) mit den Zähnen (3a) der zwei parallelen, invers orientierten Zahnstangen (303a, 303b) in Eingriff gebracht wird.

7. Hydraulische Lenkung für selbstfahrende Fahrzeuge und Maschinen, nach einem der Ansprüche 1 bis 6, **dadurch gekennzeichnet, dass** die Verzahnung (3a) der Zahnstange (3, 203, 303a, 303b) ein veränderliches lineares Profil aufweist.

8. Hydraulische Lenkung für selbstfahrende Fahrzeuge und Maschinen, nach einem der Ansprüche 1 bis 6, **dadurch gekennzeichnet, dass** die Verzahnung (3b) der Zahnstange (103) ein geradliniges lineares Profil aufweist.

9. Hydraulische Lenkung für selbstfahrende Fahrzeuge und Maschinen, nach einem der Ansprüche 1 bis 8, **dadurch gekennzeichnet, dass** das Ritzel (4, 104) ein exzentrisch gelagertes, kreisförmiges Ritzel ist.

10. hydraulische Lenkung für selbstfahrende Fahrzeuge und Maschinen, nach einem der Ansprüche 1 bis 8, **dadurch gekennzeichnet, dass** das Ritzel (4, 104) eine Ritzel mit einem nockenförmigen Profil oder Umfang darstellt.

11. Hydraulische Lenkung für selbstfahrende Fahrzeuge und Maschinen, nach einem der Ansprüche 1 bis 10, **dadurch gekennzeichnet, dass** das Ritzel durch eine Achse, die eine variable Position in Bezug auf die Verzahnung der Zahnstange einnimmt, getragen wird.

12. Hydraulische Lenkung für selbstfahrende Fahrzeuge und Maschinen, nach einem der Ansprüche 1 bis 11, **dadurch gekennzeichnet, dass** diese elastische Mittel (120,121) umfasst, die das Ritzel mit der Verzahnung der Zahnstange in Eingriff halten.

13. Hydraulische Lenkung für selbstfahrende Fahrzeuge und Maschinen, nach Anspruch 12, **dadurch gekennzeichnet, dass** die elastischen Mittel durch Zugfedern (120) gebildet sind.

14. Hydraulische Lenkung für selbstfahrende Fahrzeuge und Maschinen, nach Anspruch 12, **dadurch gekennzeichnet, dass** die elastischen Mittel durch Druckfedern (120) gebildet sind.

15. Hydraulische Lenkung für selbstfahrende Fahrzeuge und Maschinen, nach einem der Ansprüche 1 bis 14, **dadurch gekennzeichnet, dass** der exzentrische zylindrische oder in Nockenform gebildete Ritzel (4, 104) eine feste Position hat wobei der Modulkörper (6, 106, 206, 306) schwenkbar ist.

16. Hydraulische Lenkung für selbstfahrende Fahrzeuge und Maschinen, nach einem der Ansprüche 1 bis 15, **dadurch gekennzeichnet, dass** der Modulkörper (6, 106, 206, 306) eine feste Position hat wobei der exzentrische zylindrische oder in Nockenform gebildete Ritzel (4, 104) schwenkbar ist.

17. Hydraulische Lenkung für selbstfahrende Fahrzeuge und Maschinen, nach einem der Ansprüche 1 bis 16, **dadurch gekennzeichnet, dass** der Modulkörper (6, 106, 206, 306) jedes Moduls (1a, 1b) schwenkbar mit einem der lenkbaren Räder (5a, 5b) des Fahrzeugs (V) verbunden ist, während der exzentrische zylindrische oder in Nockenform gebildete Ritzel (4, 104) des besagten Moduls fest an dem Fahrzeugchassis befestigt ist.

18. Hydraulische Lenkung für selbstfahrende Fahrzeuge und Maschinen nach einem der Ansprüche 1 bis 17, **dadurch gekennzeichnet, dass** der Modulkörper (6, 106, 206, 306) jedes Moduls (1a, 1b) starr und einstückig mit dem Chassis des Fahrzeugs (V) ausgebildet ist, während der exzentrische zylindrische oder in Nockenform gebildete Ritzel (4, 104) des besagten Moduls mit einem der Räder (5a, 5b) des Fahrzeugs fest verbunden ist.

19. Hydraulische Lenkung für selbstfahrende Fahrzeuge und Maschinen nach einem der Ansprüche 1 bis 18, **dadurch gekennzeichnet, dass** der hydraulische Verteiler (8) durch einen Rotationshydraulikverteiler gebildet ist, wie beispielsweise einer hydrostatischen Servosteuervorrichtung bekannt unter dem Namen Orbitrol.

20. Hydraulische Lenkung für selbstfahrende Fahrzeuge und Maschinen nach einem der Ansprüche 1 bis 19, **dadurch gekennzeichnet, dass** jedes Modul eine translatorisch einstellbare Anschlageinrichtung (12,13) aufweist, um den maximalen Auslenkwinkel einzustellen.

21. Hydraulische Lenkung für selbstfahrende Fahrzeuge und Maschinen gemäß Anspruch 20, **dadurch gekennzeichnet, dass** ein Rückschlagventil (12) an den Enden des Körpers des Zahnstangen-Zylinders (2, 3) axial einstellbar angeordnet ist und gegenüber einer Stange oder Nadel (13) mit dem Zahnstangenkolben (3) verbunden ist, der das besagte Rückschlagventil am Hubende betätigt.

## Claims

1. Hydraulic steering for vehicles and self-propelled machines comprising at least two guiding wheels (5a, 5b) and comprising a control wheel (7) connected to a hydraulic distributor (8), **characterised in that** it comprises at least two hydraulic modules (1a, 1b), each comprising,
- on the one hand, a module body (6, 106, 206, 306) including an assembly made up of a dual-acting piston (P1-P2; P3-P4; P5) translationally integral with a rack (3, 103, 203, 303a, 303b), said dual-acting piston being housed with an ability to slide in a sealed manner inside a cylinder body (2, 102, 202, 302a, 302b), in which it demarcates two opposing chambers (C1, C2; C3, C4; C5, C6); and,
- on the other hand, a gear (4, 104) meshing with the rack (3, 103, 203, 303a, 303b), with each of these hydraulic modules (1a, 1b) being connected, on the one hand, by means of its pivoting element to one of the guiding wheels (5a, 5b) of the vehicle (V) and, on the other hand, by means of its fixed component to the chassis of said vehicle, and **characterised in that** the rack and said gear (4, 104) are shaped and combined so that any translation movement of the rack (3, 103, 203, 303a, 303b) generates, from the moment a constant flow of a hydraulic fluid is introduced into one of the chambers (C1, C2; C3, C4; C5, C6), a variable amplitude rotational movement of said module body (6, 106, 206, 306) or of said gear (4, 104),
and **in that** said distributor is connected to one (C1 or C4) of the two chambers (C1, C2 or C3, C4) demarcated by the rack piston (3) of each module, with the second (C2, C3) of said chambers of said modules communicating with each other.

2. Hydraulic steering for motor vehicles and self-propelled machines, **characterised in that** the body of each module is connected to a movable component of the vehicle or of the self-propelled machine, whereas the gear is rigidly attached to a fixed element of said vehicle or of said self-propelled machine.

3. Hydraulic steering for motor vehicles and self-propelled machines according to claim 1, **characterised in that** the gear is connected to a movable component of a vehicle or of a self-propelled machine, whereas the module body is rigidly connected to a fixed element of said vehicle or of said self-propelled machine.

4. Hydraulic steering for motor vehicles and self-propelled machines according to any one of claims 1 to 3, **characterised in that** the rack (3, 103, 303a, 303b) is made up of an intermediate element disposed between the two pistons (P1, P2 or P3, P4) of the movable assembly of a hydraulic rack cylinder.

5. Hydraulic steering for motor vehicles and self-propelled machines according to any one of claims 1 to 3, **characterised in that** one of the ends of the rack (203) is connected to the dual-acting piston P5 of a hydraulic cylinder (216) by means of the rod (217) of the piston (P5) of said cylinder (216), which is positioned on the outside and in the longitudinal extension of the housing in which said rack (203) is mounted.

6. Hydraulic steering for motor vehicles and self-propelled machines according to any one of claims 1 to 3, **characterised in that** the gear (4) is engaged with the toothing (3a) of two parallel, inversely oriented racks (303a, 303b).

7. Hydraulic steering for motor vehicles and self-propelled machines according to any one of claims 1 to 6, **characterised in that** the toothing (3a) of the rack (3, 203, 303a, 303b) has a variable linear profile.

8. Hydraulic steering for motor vehicles and self-propelled machines according to any one of claims 1 to 6, **characterised in that** the toothing (3b) of the rack (103) has a straight linear profile.

9. Hydraulic steering for motor vehicles and self-propelled machines according to any one of claims 1 to 8, **characterised in that** the gear (4, 104) is a circular gear mounted in an eccentric manner.

10. Hydraulic steering for motor vehicles and self-propelled machines according to any one of claims 1 to 8, **characterised in that** the gear (4, 104) is a gear having a camshaped profile or periphery.

11. Hydraulic steering for motor vehicles and self-propelled machines according to any one of claims 1 to 10, **characterised in that** the gear is supported by an axle occupying a variable position relative to the toothing of the rack.

12. Hydraulic steering for motor vehicles and self-propelled machines according to any one of claims 1 to 11, **characterised in that** it comprises flexible means (120, 121) keeping the gear engaged with the toothing of the rack.

13. Hydraulic steering for motor vehicles and self-propelled machines according to claim 12, **characterised in that** the flexible means are made up of springs (120) acting under traction.

14. Hydraulic steering for motor vehicles and self-propelled machines according to claim 12, **characterised in that** the flexible means are made up of springs (121) acting under compression.

15. Hydraulic steering for motor vehicles and self-propelled machines according to any one of claims 1 to 14, **characterised in that** the eccentric cylindrical or cam-profiled gear (4, 104) has a fixed position and the module body (6, 106, 206, 306) is pivoting.

16. Hydraulic steering for motor vehicles and self-propelled machines according to any one of claims 1 to 15, **characterised in that** the module body (6, 106, 206, 306) has a fixed position and the eccentric cylindrical or cam-profled gear (4, 104) is pivoting.

17. Hydraulic steering for vehicles and self-propelled machines according to any one of claims 1 to 16, **characterised in that** the module body (6, 106, 206, 306) of each module (1a, 1b) is pivoting and is connected to one of the guiding wheels (5a, 5b) of said vehicle (V), whereas the eccentric cylindrical or cam-profiled gear (4, 104) of said module is securely fixed to the chassis of the vehicle.

18. Hydraulic steering for vehicles and self-propelled machines according to any one of claims 1 to 17, **characterised in that** the module body (6, 106, 206, 306) of each module (1a, 1b) is fixed and is rigidly connected to the chassis of the vehicle (V), whereas the eccentric cylindrical or cam-profiled gear (4, 104) of said module is rigidly attached to one of the wheels (5a, 5b) of the vehicle.

19. Hydraulic steering for vehicles and self-propelled machines according to any one of claims 1 to 18, **characterised in that** the hydraulic distributor (8) is made up of a rotary hydraulic distributor such as, for example, a hydrostatic servo-controlled device that is known per se as an orbitrol device.

20. Hydraulic steering for vehicles and self-propelled machines according to any one of claims 1 to 19, **characterised in that** each module comprises a stop system (12, 13) that is translationally adjustable in order to adjust the maximum turning angle.

21. Hydraulic steering for vehicles and self-propelled machines according to claim 20, **characterised in that** it comprises a non-return valve (12) positioned in an axially adjustable manner at the ends of the body (2) of the rack cylinder (2, 3) and disposed facing a rod or pin (13) connected to the rack piston (3) that activates said non-return valve at the end of travel.
